Europäisches Patentamt

(19) European Patent Office

Office européen des brevets

(11) Publication number: **0 034 294**
A2

# (12) EUROPEAN PATENT APPLICATION

(21) Application number: 81100741.8

(22) Date of filing: 02.02.81

(51) Int. Cl.³: **F 16 L 11/08**
**B 29 D 23/00**

(30) Priority: 13.02.80 US 121061

(43) Date of publication of application:
26.08.81 Bulletin 81/34

(84) Designated Contracting States:
DE FR IT

(71) Applicant: UNIROYAL, INC.
1230 Avenue of the Americas Rockefeller Center
New York, New York 10020(US)

(72) Inventor: Visser, Harry D.
231 Argyle Road Cheshire
New Haven Connecticut(US)

(72) Inventor: Derderian, Carl
67 Towpath Lane Cheshire
New Haven Connecticut(US)

(74) Representative: Tiedtke, Harro, Dipl.-Ing.
Patentanwaltsbüro Tiedtke-Bühling
Kinne-Grupe-Pellmann-Dragotti Bavariaring 4
D-8000 München 2(DE)

(54) Vulcanized reinforced air conditioner hose and method of making the same.

(57) Vulcanized reinforced air conditioner hose includes an inner layer of nylon resin not less than about 0.006 inch (0.015 cm) and not more than about 0.030 inch (0.0762 cm) thick which forms the inner surface of the hose, an outer layer of elastomeric material that surrounds the inner layer and forms the external environment-resistant cover of the hose, and a layer of filamentary reinforcement interposed between the inner and outer layers. The hose is characterized by a flexibility value, expressed in terms of the force required to achieve a specified bending deflection, and by a refrigerant permeation value, expressed in terms of the weight loss of refrigerant through the hose wall per unit length of the hose per year, that are not greater than certain respective specified maxima as measured by prescribed testing procedures. Methods of manufacturing such hose are also disclosed. This abstract is not to be taken either as a complete exposition or as a limitation of the present invention, however, the full nature and extent of the invention being discernible only by reference to and from the entire disclosure.

Fig. 1.

HOSE-REINFORCED AUTOMOTIVE AIR CONDITIONER

This invention relates to vulcanized reinforced hose, and in particular to such hose which is designed for use in air conditioning systems.

Although the hose according to the present invention is adapted for use in all types of air conditioning systems, the following description will be couched in the first instance in terms of the use of the hose in the air conditioning systems of vehicles.

Vehicle air conditioning systems conventially utilize lengths of flexible hose, interconnecting different parts of the system, through which the refrigerant fluid (typically dichlorodifluoromethane, available commercially under a variety of registered trademarks, e.g. "Freon 12") flows. Such hose has to meet two basic requirements, namely, flexibility and resistance to the loss of refrigerant from the system by permeation of the refrigerant through the walls of the hose. In addition, the hose should have, as may be required in any given application, adequate resistance to one or more of such external environmental factors as heat, oil, battery acid, moisture abrasion and impacts.

At the present time, basically two types of hose are available on the market for use in vehicular air conditioning systems: one is an "all-rubber" hose composed of inner and outer layers or tubes of rubber with an intermediate single or double layer of filamentary reinforcement, and the other is a thermoplastic hose composed of an inner layer or tube of nylon resin and an outer layer or tube of thermoplastic polyolefin (polyethylene, polypropylene, blends thereof, or the like) with a single or double layer of filamentary reinforcement located therebetween. In both of these types of hose, the outer layer or cover provides resistance to external environmental factors, while the inner layer provides resistance to permeation of the refrigerant through the hose wall. As a practical matter, however, each of these types of hose has been able to meet only one of the aforesaid basic requirements, and vehicle manufacturers have long sought for an optimum hose construction, i.e. one having both a low "flexibility value" and a low "permeation value." As used herein, the term "flexibility value" is defined as the force required to impart to the hose a bending deflection of 1 inch or 2.54 cm when the force is applied to a longitudinally unconstrained section of the hose at a point located midway between two support points spaced 6 inches or 15.24 cm apart, and the term "permeation value" is defined as the loss of refrigerant by weight per unit length of the hose per year as measured by SAE (Society of Automotive Engineers) test method J51B. Thus, a typical all-rubber textile fiber braid-reinforced hose having an inner diameter of 0.625 inch (1.59 cm), an outer diameter of 1.125 inch (2.86 cm), an inner tube wall thickness of 0.145 inch (0.368 cm), and a cover layer thickness of 0.050 inch (0.127 cm), when tested in accordance with the above definitions, was found to have a flexibility value of 17 lbs. (7.72 kg) and a permeation value of 3.5 lbs/ft/yr (5.21 kg/m/yr). On the other hand, a typical nylon/polyolefin textile fiber braid-reinforced hose having an internal diameter of 0.630 inch (1.60 cm), an external diameter of 0.895 inch (2.27 cm), an inner layer or tube wall thickness of 0.035 inch (0.088 cm), and a cover layer thickness of 0.030 inch (0.076 cm), was found, when tested in accordance with the above definitions, to have a flexibility value of 40 lbs. (18.16 kg) and a permeation value of 0.4 lb/ft/yr (0.59 kg/m/yr). As can be seen, therefore, the all-rubber hose is appreciably more flexible than the nylon/polyolefin hose, whereas the latter is far less permeable to "Freon 12" refrigerant than the all-rubber hose. In this regard it should be noted that vehicle manufacturers have expressed a desire for a vehicular air conditioning system hose that has a flexibility value at least as good as that of an all-rubber hose and a permeation value not in excess of 1.0 lb/ft/yr (1.48 kg/m/yr).

It is, consequently, an object of the present invention to provide vulcanized reinforced hose suited for use in air conditioning systems and having, with respect to the specifications of vehicle manufacturers for such hose, optimum flexibility and permeation values (as herein defined).

It is also an object of the present invention to provide methods of manufacturing such hose.

Generally speaking, the present invention is embodied in, and its basic objectives are achieved by means of, a vulcanized reinforced air conditioner hose which includes a tubular inner layer of nylon resin that forms the inner surface of the hose and provides resistance to permeation of refrigerant fluid through the hose wall, an outer layer surrounding the inner layer and made of an elastomeric material (at times herein also referred to as "rubber") that forms the cover of the hose and provides resistance to external environmental factors, and one or more layers of filamentary reinforcement disposed intermediate the outer and inner layers and surrounding the latter, and which is characterized by the fact that on the one hand the flexibility value of the hose, which is defined as the force required to impart to the hose a bending deflection of 1.0 inch (2.54 cm) when the force is applied to a longitudinally unconstrained section of the hose at a point located midway between two support points spaced 6 inches (15.24 cm) apart, is not greater than 13.0 lbs. (5.90 kg), and that on the other hand the refrigerant permeation value of the hose, which is defined as the weight loss of refrigerant per unit length of hose per year as measured by SAE test method J51B, is not greater than 1.0 lb/ft/yr (1.48 kg/m/yr).

More particularly, we have discovered that the flexibility value and the permeation value of such a nylon/rubber hose are primarily determined by the thickness of the nylon resin inner layer or tube of the hose. Accordingly, the basic technical advance of the present invention is the utilization, in such a hose, of a nylon inner layer which is not more than about 0.030 inch (0.0762 cm) thick, and which preferably is about 0.010 inch (0.0254 cm) thick. Thus, and merely by way of illustration, a hose having an inner diameter of about 0.628 inch (1.595 cm), an outer diameter of 0.895 inch (2.27 cm), a nylon inner layer thickness of 0.012 inch (0.030 cm), and a cover layer thickness of 0.075 inch (0.191 cm), when tested in accordance with the above definitions, was found to have a flexibility value of less than 10 lbs. (4.54 kg) and a permeation value of less than 1.0 lb/ft/yr (1.48 kg/m/yr).

In this connection it will be noted that the above indicated preferred thickness of the nylon inner layer lies somewhat above the lower end, namely 0.006 inch (0.015 cm), of the range of thicknesses contemplated by the present invention. The preferred thickness, however, represents a practical lower limit because of the need to take into account ordinary manufacturing tolerances. Thus, it is found that during the curing of the hose, a certain amount of flow occurs in the nylon layer as the filamentary reinforcement is forced into intimate surface contact with that layer. As a result, if the nylon layer has a wall thickness of less than about 0.006 inch (0.015 cm), it is found that the strands of the reinforcement material press so deeply into the nylon layer as to produce pin-holes and thin spots the existence of which adversely affects the permeation value of the hose and, in fact, renders it unsuitable for use as an air conditioner hose.

The production of vulcanized reinforced air conditioner hose according to the present invention is preferably effected by means of a batch process entailing the formation and curing of such hose in finite lengths. Basically, the process in a per se known manner utilizes a solid flexible mandrel which is made of rubber or of a suitable thermoplastic material such as nylon, or of a combination of such materials, and is capable of withstanding the vulcanizing temperatures to be encountered in the curing of the hose.

In the first step of the preferred version of the process, the mandrel is fed into and through a standard cross-head extruder by means of which a 0.010-0.030 inch (0.0254-0.0762 cm) thick tube or layer of nylon resin, preferably a copolymer of nylon 6 and nylon 66, is formed on the mandrel. The mandrel/nylon tube combination, upon exiting from the extruder, may be subjected to a cooling operation to reduce the temperature of the nylon tube to an acceptable level, for example 110-120°F (43-49°C). In this connection it should be noted that by virtue of the fact that the nylon tube is extremely thin, the cooling stage of the process may entail no more than an exposure of the nylon tube to the ambient atmosphere (assuming, of course, that the duration of such exposure is sufficient), and the term "cooling operation" should be interpreted to include a passive cooling of this type. Nevertheless, if an accelerated degree of cooling is desired, especially if the duration of the exposure would not be sufficient to permit passive cooling, it is within the contemplation of the present invention that the cooling stage may entail moving the mandrel/tube combination either past a device for blowing air over the tube or first through a bath of cooling liquid (e.g. water) and then through a drying stage to remove surface moisture from the cooled tube.

The mandrel/tube combination is then advanced to a device for applying an adhesive layer to the exterior of the nylon tube, and thence to a device for applying a layer of filamentary reinforcement circumferentially about the tube. In the preferred version of the process, the adhesive layer is initially provided in the form of a tape of a suitable tie gum or uncured rubber stock, the width of the tape being slightly greater than the exterior cross-sectional circumference of the nylon tube. In the tape applicator, the tape is initially unwound from a suitable supply roll and laid longitudinally onto the uppermost portion of the tube during the advance of the mandrel/tube combination toward and just prior to its entry into the reinforcement applicator. In the latter, which preferably is a braider, the application of the filamentary reinforcement then causes the adhesive layer-forming tape to be wrapped fully about the tube with a slight degree of overlap along the lowermost portion of the latter, the tape thus being in a position ultimately to serve as an adhesive for bonding the filamentary reinforcement braid to the surface of the nylon tube.

The so-formed composite is then passed through another cross-head extruder where an outer layer of uncured rubber, e.g. EPDM rubber, neoprene or the like which when cured will be the external environment-resistant cover of the hose, is applied. The uncured hose and mandrel combination emerging from the rubber cover extruder is then dusted with an anti-stick powder and fed through a lead press in which a lead sheath is extruded about the exterior of the cover layer. Thereupon, a suitable length of the lead-sheathed hose and mandrel combination is preferably wound onto a reel (having been cut to that length either prior to or after being wound on the reel) which is then transferred to a vulcanizer. After an appropriate period of time sufficient, under the pressure and temperature conditions maintained in the vulcanizer, to ensure adequate curing of the rubber cover layer and the adhesive layer, the reel is removed from the vulcanizer, and upon cooling, the lead sheath is stripped off the hose and the mandrel is extracted from the interior of the hose. The latter may then be subjected to such further processing, including testing, marking, the application of fittings, etc., as may be desired.

The foregoing and other objects, characteristics and advantages of the present invention will be more clearly understood from the following detailed description thereof when read in conjunction with the accompanying drawings, in which:

Fig. 1 is a fragmentary plan view, partly broken away and partly in section, of a vulcanized reinforced air conditioner hose according to the present invention;

Fig. 2 is a sectional view taken along the line 2-2 in Fig. 1;

Fig. 3 is a block diagram illustrating schematically the process of the present invention for making the hose shown in Fig. 1;

Figs. 4 and 5 are enlarged sectional views taken, respectively, along the lines 4-4 and 5-5 in Fig. 3;

Fig. 6 is a perspective illustration of a testing fixture for use in determining the flexibility value of a hose according to the present invention, the fixture being shown with the hose test specimen in its starting position and without any force being applied; and

Fig. 7 is a front elevational view of the test fixture shown in Fig. 6 and also illustrates in phantom outline the displacements undergone by the fixture and the deflection of the test specimen during the application of a bending force to the test specimen.

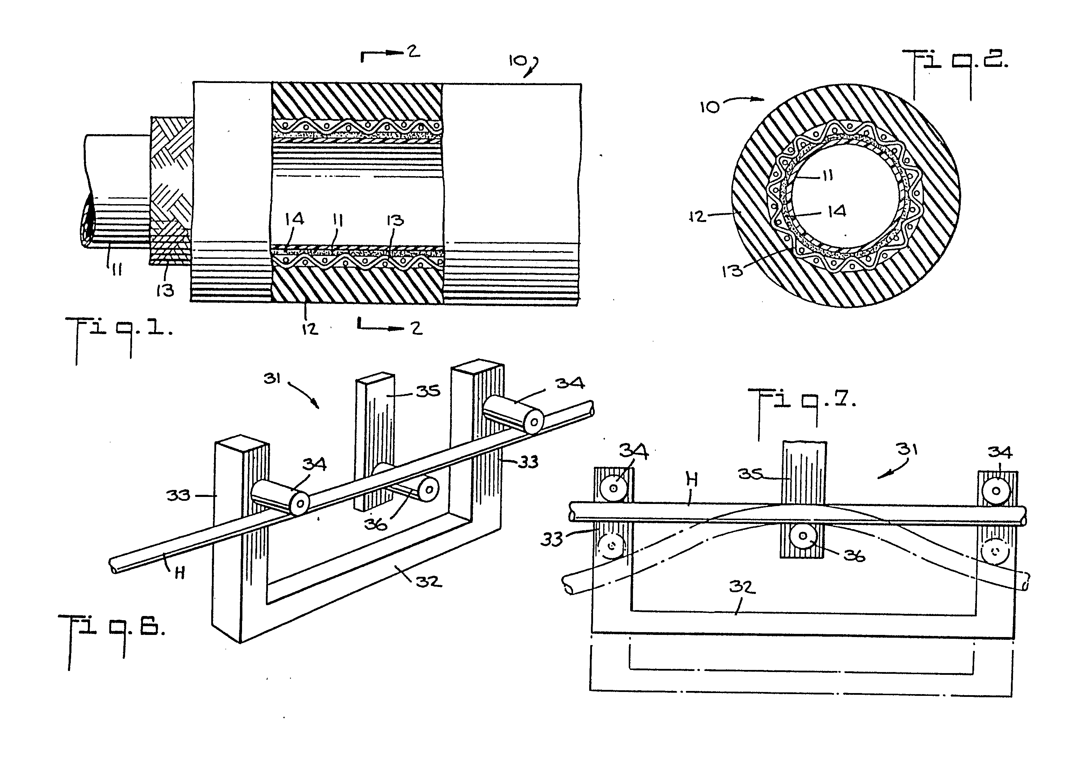

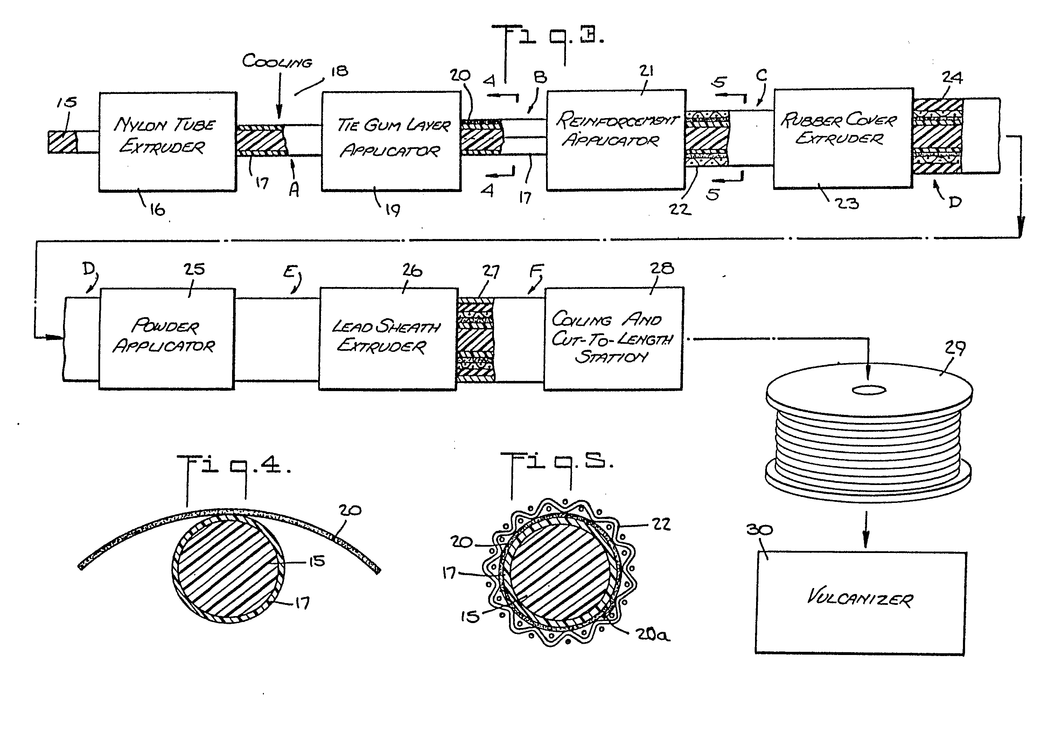

Referring now first to Figs. 1 and 2, the air conditioner hose 10 according to the present invention includes an inner layer or tube 11 of nylon resin that forms the inner surface of the hose and provides resistance to permeation of refrigerant through the hose wall, an outer layer or tube 12 of an elastomeric material that forms the cover of the hose and provides resistance to external environmental factors, and a layer (or plurality of layers) 13 of filamentary reinforcement interposed between the inner and outer layers 11 and 12, the reinforcing material being adhesively bonded to the inner layer or tube 11 by means of a tie gum or uncured rubber layer 14 and being vulcanized to the outer layer or cover 12. The thickness of the inner layer 11 is not less than 0.006 inch (0.015 cm) and preferably is about 0.010-0.030 inch (0.0254-0.0762 cm), and typically its interior diameter is 5/8 or 0.625 inch (1.59 cm). As previously indicated, nylon resin, for example a copolymer of nylon 6 and nylon 66, is preferred as the material for the layer 11 because of its resistance to permeation by "Freon 12" refrigerant, although other materials having comparable refrigerant permeation resistance and capable of being formed into a cohesive layer or tube sufficiently thin to ensure attainment of the desired hose flexibility value can also be used. The elastomeric material of which the cover 12 is made may be any of those normally used in the manufacture of vehicular hose where resistance to one or more of the hereinabove named external environmental factors is a requirement, such as, for example, EPDM rubber (ethylene propylene diene monomer rubber), neoprene, and the like. The thickness of the layer 12 is such as to provide the hose with the desired outer diameter, typically about 0.895 inch (2.27 cm). The filamentary reinforcement layer may be constructed of metallic filaments or strands, e.g. steel or other metal
wire, or of non-metallic filaments or strands of synthetic
textile fibers, e.g. glass fiber, rayon, nylon, aramid
(aromatic polyamide), polyester, and the like or blends of
the same, and the reinforcement may be of a braid, spiral,
knit or woven construction. Presently preferred is a reinforcement layer constituted of a single braid of rayon yarn
(4 ends, 2200 denier) applied at a 1.65 inch (4.19 cm)
pitch. If desired or necessary, the filaments or strands of
the reinforcement may be pretreated with a suitable material,
e.g. a resorcinolformaldehyde latex (RFL), to enhance their
adhesion to the elastomeric material. The adhesive layer 14
is preferably formed of any suitable tie gum or uncured rubber
stock (compounds of this type capable of adhering to both nylon resin and textile or other fibers such as mentioned above
are well known to those skilled in the reinforced hose manufacturing art and need not be further described herein).

The method of making the air conditioner hose 10 according to the present invention is generally shown in Fig. 3.
In the illustrated embodiment, which represents the formation
of a hose of the preferred construction and having the aforesaid typical inner and outer diameters, a solid but flexible
mandrel 15 having an outer diameter of 0.610 inch (1.55 cm)
and formed in any suitable way (e.g. by extrusion techniques
well known to those skilled in the art) of rubber, nylon (or
a similar thermoplastic material), or combinations thereof,
and either with or without an internal reinforcement of wire
or textile filaments, is initially fed from a source thereof
(not shown) through a first cross-head extruder 16 where a
nylon resin, e.g. a copolymer of nylon 6 and nylon 66 (or a
comparable material as hereinbefore stated), is extruded on-
to the mandrel in the form of a tube 17 having a thickness
of 0.010 inch (0.0254 cm). The mandrel and tube combination
A so formed, upon leaving the extruder 16, is subjected to a
cooling operation. The cooling stage, which is only schematically indicated and is designated 18, may entail either
merely an exposure of the tube to the ambient atmosphere if
that will suffice to lower the tube temperature to an acceptable level, or the use of an auxiliary device (not shown) for effecting an accelerated cooling. Such a device, as stated, may be either a blower of any suitable type or a bath of cooling liquid, e.g. water, and in the latter case will also have means associated therewith for drying the tube after it emerges from the cooling bath.

The cooled tube 17, still on the mandrel 15, is then advanced through a bonding layer applicator 19. The latter may include a bath of a suitable liquid adhesive or tie gum composition through which the hose is passed to coat the hose with a thin layer of the said composition. Alternatively, the applicator 19 may be a cross-head extruder to form a tubular layer of uncured rubber about the nylon resin tube 17. In the preferred version of the process of the present invention, however, the adhesive is provided in the form of a tape 20 of uncured rubber or tie gum stock about 2 inches (5.1 cm) wide, i.e. somewhat wider than the outer cross-sectional circumference of the tube 17 (see also Fig. 4). The tape is initially wound on a roll from which it is unwound and laid longitudinally onto the top portion of the tube 17 as the mandrel/tube combination A moves therethrough. As usual, a polyethylene separator strip or a coating of an anti-stick powder such as zinc stearate on the faces of the tape will be provided so as to prevent adhesion of adjacent turns of the tape to one another, and if a strip is used it is removed before the tape is applied to the nylon tube. As the mandrel/tube/tape combination B leaves the applicator 19, the tape 20 begins to drape downwardly somewhat about the tube, as shown on an enlarged scale in Fig. 4.

The mandrel/tube/tape combination then is advanced through a reinforcement applicator 21 where the filamentary reinforcement 22 is applied to the combination. As previously mentioned, the reinforcement applicator is preferably a conventional 24-spool horizontal braider and serves to form a braid of the twenty four filamentary reinforcement strands, each preferably a 4-end, 2200 denier rayon yarn that has been pretreated with a RFL composition, directly about the mandrel/tube/tape combination. As a result, the tape 20 is wrapped snugly about the tube 17 by the reinforcement with a small degree of overlap, as shown at 20a in Fig. 5.

The so-formed combination C is then fed through another cross-head extruder 23 where an outer layer or tube 24 of elastomeric compound is applied to the exterior of the mandrel/tube/tape/reinforcement combination C. The elastomeric material preferably is an EPDM rubber, and the layer 24 is applied to a thickness providing for an outer diameter of about 0.890 inch (2.26 cm). From the extruder 23 the mandrel/tube/tape/reinforcement/cover combination D is passed through a powder applicator 25 where a suitable anti-stick powder, such as mica, talc or the like, is applied to the outer surface of the rubber layer 24. The dusted combination E is then fed through a lead press or extruder 26 where a sheath 27 of lead is applied about the cover layer 24. The resultant mandrel/tube/tape/reinforcement/cover/ sheath combination F is then fed to a final station 28 where it is wound up on a reel 29, being (if necessary or desired) cut to any desired length either prior to or at the end of the winding operation. The fully loaded reel is then deposited in a vulcanizer or curing chamber 30 of conventional construction where the hose is cured by being subjected to the desired vulcanizing temperature and pressure. The precise temperature and pressure selected will, of course, depend on the cure requirements of the material of the adhesive bonding layer 20 and the elastomeric material of the cover layer 24. Merely by way of example, it is contemplated that normally the hose will be cured for 45 minutes at a temperature of 316°F (158°C), corresponding to a steam pressure of about 70 psi (4.9 kg/cm$^2$), but obviously higher or lower temperatures and pressures and different cure times can be used if conditions warrant.

As will be understood, as the temperature in the vulcanizer rises, the mandrel 15 confined within the uncured hose is also heated and expands somewhat. This expansion and the resultant pressure exerted by the mandrel on the inner surface of the hose in opposition to the external constraint exerted by the lead sheath on the outer surface of the hose thus act on the one hand to increase the inner diameter of the hose to its desired value and on the other hand to ensure that the elastomeric material of the cover layer 24 and the tie gum layer 20 are forced into the interstices of the filamentary reinforcement to effect the desired good adhesion between the latter and both the cover and the inner layer of the hose.

At the end of the cure cycle (from a practical standpoint, the cure cycle is taken as beginning when the heating medium in the vulcanizer has reached the vulcanizing temperature), a cooling period is commenced and continued until the ambient temperature in the vulcanizer drops to less than 200°F (93°C) and preferably until the temperature is about 150°F (66°C). The reel 29 is then removed from the vulcanizer and transferred to the final hose processing station at which the lead sheath is stripped off the cured hose, the mandrel is extracted (e.g. by being blown out in known fashion), and the hose is passed through a cleaning device and, if desired, also marked with suitable identifying indicia, e.g. number codes and the like.

The following examples will more clearly illustrate the technical advance achieved by the present invention in terms of the flexibility and permeation values of the hose.

Four lengths of vehicular air conditioner hose 10 (hereinafter designated Hose No. 1 to Hose No. 4, respectively) were manufactured by the above-described process. All the hoses had, within normal manufacturing tolerances, an inner diameter of 0.625 inch (1.59 cm) and an outer diameter of 0.890 inch (2.26 cm) and were also identical in all other respects of structure and composition except for differences in one independent variable, namely the thickness of the inner nylon resin layer or tube 11. These thicknesses were, respectively, again within normal manufacturing tolerances, 0.010 inch, 0.020 inch, 0.030 inch and 0.040 inch (0.0254 cm, 0.051 cm, 0.076 cm and 0.102 cm).

The four hoses were then tested for flexibility value and "Freon 12" permeation value. As previously indicated, the permeation value of each hose was determined in accordance with SAE test method J51B, and the flexibility value of each hose was determined by measuring the force required to impart a specified bending deflection to the hose. For this purpose, a test fixture 31 (see Figs. 6 and 7) was used in conjunction with a conventional Instron tester (although any other type of tensile testing machine would also have been satisfactory). As shown, the fixture 31 includes a lower frame 32 having a pair of upwardly extending arms 33 on which are freely rotatably supported a pair of horizontal rollers 34 arranged at a center to center spacing of 6 inches (15.24 cm). Disposed intermediate the arms 33 is an arm 35 of an upper frame (not shown) which freely rotatably supports a horizontal roller 36, the arrangement being such that the axis of rotation of the roller 36 is located precisely midway between the axes of rotation of the rollers 34. In the illustrated case, the frame 32 was connected to the movable lower jaws or gripping device of the tester, while the upper frame was connected to the stationary upper jaws.

To test each hose, a longitudinally unconstrained hose specimen or section of suitable length, designated H in Figs. 6 and 7, was arranged in the manner shown, i.e. so as to pass over the roller 36 and beneath the rollers 34. The testing device was then activated and, as the frame 32 was displaced downwardly from its solid-line to its broken-line position shown in Fig. 7, the hose H was bent downwardly at its opposite end regions by the rollers 34, as also shown in phantom outline in Fig. 7. The application of the force was continued until a bending deflection of 1 inch (2.54 cm) had been achieved, i.e. until the frame 32 and the rollers 34 had been displaced through such an interval. The force required to effect that displacement was then read off the dial of the testing machine.

The results of the various tests are shown in the following table:

| Hose Number | Flexibility Value | | Permeation Value | |
|---|---|---|---|---|
| 1 | 9 lbs. | (4.09 kg) | 0.85 lb/ft/yr | (1.266 kg/m/yr) |
| 2 | 10 lbs. | (4.54 kg) | 0.65 lb/ft/yr | (0.968 kg/m/yr) |
| 3 | 13 lbs. | (5.90 kg) | 0.475 lb/ft/yr | (0.707 kg/m/yr) |
| 4 | 20 lbs. | (9.08 kg) | 0.35 lb/ft/yr | (0.521 kg/m/yr) |

The table clearly shows that when an air conditioner hose is made, as were Hose Nos. 1, 2 and 3, with a nylon resin inner layer the wall thickness of which is not in excess of 0.030 inch (0.0762 cm), the hose satisfies the hereinbefore stated criteria for optimum hose flexibility and resistance to "Freon 12" loss. The table also shows on the other hand, that when a hose is made, as was Hose No. 4, with a nylon resin inner layer the thickness of which exceeds the prescribed maximum, such a hose, even though it exhibits markedly lower permeation values than Hose Nos. 1, 2 and 3, is considerably less flexible. It will be appreciated, in this regard, that in a vehicular air conditioning system, this greater hose stiffness would be an undesirable feature, because of the usually extremely limited amount of space that is normally available in the section of the vehicle reserved for housing the air conditioning system components, e.g. in the engine compartment of an automotive vehicle.

Generally corresponding results are found in hoses embodying the basic principles of the present invention but characterized by nominal size designations (internal diameters) other than the so far described 5/8 inch (1.59 cm) size designation, e.g. in hoses having internal diameters of, respectively, 5/16 or 0.3125 inch (0.79 cm), 13/32 or 0.41 inch (1.04 cm), and 1/2 or 0.5 inch (1.27 cm). Merely by way of illustration (and again it should be kept in mind that here as elsewhere in this specification and the hereto appended claims, all references to dimensions of the hose are to be considered as subject to normal manufacturing tolerances), a hose having an inner diameter of 13/32 or 0.41 inch (1.04 cm), a nylon resin inner layer thickness of 0.016 inch (0.041 cm), and a rubber cover layer of sufficient wall thickness to impart to the hose an outer diameter of 0.625 inch (1.59 cm), was found to have, when tested as herein described, a flexibility value of 5.2 lbs. (2.36 kg) and a permeation value of 0.23 lb/ft/yr (0.34 kg/m/yr). Again, a hose having an inner diameter of 1/2 or 0.5 inch (1.27 cm), a nylon resin inner layer thickness of 0.018 inch (0.046 cm), and a rubber cover layer of sufficient wall thickness to impart to the hose an outer diameter of 0.74 inch (1.88 cm), was found to have a flexibility value of 6.8 lbs. (3.09 kg) and a permeation value of 0.53 lb/ft/yr (0.78 kg/m/yr).

Reverting for the moment to the test fixture 31, it will be understood that the arrangement of the components thereof could, of course, be reversed. For example, the upper and lower frames could be inverted, with the rollers 34 being located below the hose specimen H and the roller 36 above the same and with the frame 32 then remaining stationary while the arm 35 and roller 36 are moved downwardly. Still other equivalent arrangements will readily suggest themselves to those skilled in the art. In any of these, however, it will be seen that effectively a force is applied to a point on the hose test specimen that is located midway between two support points spaced 6 inches (15.24 cm) apart.

It will be understood that the foregoing description of preferred embodiments of the present invention is for purposes of illustration only, and that the various structural and operational features of the air conditioner hose and manufacturing process herein disclosed are susceptible to a number of modifications and changes none of which entails any departure from the spirit and scope of the present invention as defined in the hereto appended claims. Thus, the nylon resin inner layer of the hose, in lieu of being made of a copolymer of nylon 6 and nylon 66, may be made of, for example, nylon 11 or nylon 12. The adhesive layer-forming tape, in lieu of being laid linearly onto the top of the nylon resin tube on the mandrel, may be applied by being helically or spirally wound about the nylon resin tube with

0034294

a slight amount of overlap between the successive adjacent turns of the tape. Also, the uncured hose need not be encased in a lead sheath for the purpose of the curing operation; it can, for example, be wound without a lead sheath directly onto a reel (or even wound into a coiled form without a lead sheath and without a reel and placed directly onto a suitable support such as a pallet and then placed into the vulcanizer, and in the vulcanizer the hose can be either exposed directly to the vulcanizer atmosphere (e.g. steam) or immersed in a water-filled receptacle which is exposed to the vulcanizer atmosphere. Further, vulcanized reinforced hose according to the present invention can be used in both automotive and non-automotive vehicles, e.g. automobiles, light and heavy trucks, buses, railroad cars, airplanes, recreational vehicles, trailers for both passenger and commercial vehicles, and even farm tractors and off-the-road equipment. In such mobile applications the flexible hose of the present invention is greatly preferred because of its ability to accommodate such factors as limited space availability, vibrations due to vehicular movement, etc. Still further, it is also contemplated that the hose of the present invention may be used in non-mobile type air conditioning systems, such as those intended for and installed in commercial and non-commercial locations, e.g. shops and residences, even though in a stationary air conditioning system flexibility of the refrigerant-carrying lines is not a critical requirement.

WHAT IS CLAIMED IS:

1. A vulcanized reinforced air conditioner hose which includes a tubular inner layer of nylon resin that forms the inner surface of the hose and provides resistance to permeation of refrigerant fluid through the hose wall, an outer layer surrounding the inner layer and made of an elastomeric material that forms the cover of the hose and provides resistance to external environmental factors, and a layer of filamentary reinforcement disposed intermediate the outer and inner layers and surrounding the latter, characterized in that

(a) the flexibility value of the hose, which is defined as the force required to impart to the hose a bending deflection of 1.0 inch (2.54 cm) when the force is applied to a longitudinally unconstrained section of the hose at a point located midway between two support points spaced 6 inches (15.24 cm) apart, is not greater than 13.0 lbs. (5.90 kg), and

(b) the refrigerant permeation value of the hose, which is defined as the weight loss of refrigerant per unit length of hose per year as measured by SAE test method J51B, is not greater than 1.0 lb/ft/yr (1.48 kg/m/yr).

2. A hose as claimed in claim 1, wherein the wall thickness of said inner layer is not greater than about 0.030 inch (0.0762 cm).

3. A hose as claimed in claim 1 or 2, wherein the wall thickness of said inner layer is not less than 0.006 inch (0.015 cm).

4. A hose as claimed in claim 1, wherein the wall thickness of said inner layer is in the range of about 0.010-0.030 inch (0.0254-0.0762 cm).

5. A hose as claimed in claim 1, wherein the wall thickness of said inner layer is in the range of about 0.010-0.020 inch (0.0254-0.051 cm).

6. A hose as claimed in claim 1, wherein said wall thickness of said inner layer is in the range of 0.010-0.030 inch (0.0254-0.0762 cm), said flexibility value is in the range of 3.5-13 lbs. (1.59-5.90 kg), and said refrigerant permeation value is in the range of 0.030-0.85 lb/ft/yr (0.45-1.266 kg/m/yr).

7. A hose as claimed in claim 1, wherein said wall thickness of said inner layer is in the range of 0.010- 0.020 inch (0.0254-0.051 cm), said flexibility value is in the range of 3.5-10 lbs. (1.59-4.54 kg), and said refrigerant permeation value is in the range of 0.30-0.85 lb/ft/yr (0.45-1.266 kg/m/yr).

8. A hose as claimed in claim 1, 6 or 7, wherein the inner diameter of said inner layer is 0.625 inch (1.59 cm).

9. A hose as claimed in claim 1, 6 or 7, wherein the inner diameter of said inner layer is 0.50 inch (1.27 cm).

10. A hose as claimed in claim 1, 6 or 7, wherein the inner diameter of said inner layer is 0.41 inch (1.04 cm).

11. A hose as claimed in claim 1, 6 or 7, wherein the inner diameter of said inner layer is 0.3125 inch (0.79 cm).

12. A hose as claimed in claim 1, wherein said nylon resin is a copolymer of nylon 6 and nylon 66, and said elastomeric material is EPDM or neoprene rubber.

13. A hose as claimed in claim 1 or 12, wherein the material of which said filamentary reinforcement is made is a fiber selected from the group consisting of nylon, aromatic polyamide (aramid), polyester, rayon, glass and metal wire.

14. A method of making a vulcanized reinforced air conditioner hose the construction of which includes a tubular inner layer of nylon resin that forms the inner surface of the hose and provides resistance to permeation of refrigerant fluid through the hose wall, an outer layer surrounding the inner layer and made of an elastomeric material that forms the cover of the hose and provides resistance to external environmental factors, and a layer of filamentary reinforcement disposed intermediate the outer and inner layers and surrounding the latter, and which method comprises that (a) layers of nylon resin, filamentary reinforcement and uncured elastomeric material are built up in sequence on a solid flexible mandrel that is advanced longitudinally in sequence through a plurality of respective layer building stations, (b) the entire mandrel-borne composite is subjected to a curing operation for vulcanizing the elastomeric material, and (c) at the end of the curing operation the mandrel is extracted from the cured hose;

characterized in that

(A) said layer of nylon resin is built up by extrusion of nylon resin onto and circumferentially about the mandrel to a thickness of not less than about 0.006 inch (0.015 cm) and not more than about 0.030 inch (0.0762 cm), and

(B) prior to the entry of the mandrel with said nylon resin layer thereon into the filamentary reinforcement layer building station, a layer of a material for adhesively bonding said filamentary reinforcement layer to said nylon resin layer is deposited on the latter.

15. A method as claimed in claim 14, characterized in that after the mandrel with said nylon resin layer thereon has emerged from the nylon resin layer building station and prior to the depositing of said adhesive bonding material layer onto said nylon resin layer, the latter is subjected to a cooling operation.

16. A method as claimed in claim 14 or 15, characterized in that said adhesive bonding material is initially in the form of a tape the width of which is not less than the outer cross-sectional circumference of said nylon resin layer on the mandrel, and said tape is laid longitudinally onto the top surface region of said nylon resin layer on the mandrel and is subsequently wrapped fully about said nylon resin layer by said filamentary reinforcement concomitantly with the formation of said filamentary reinforcement layer.

17. A method as claimed in claim 14 or 15, characterized in that said adhesive bonding material is initially in the form of a tape, and said tape is wound spirally about said nylon resin layer on the mandrel with a slight amount of overlap between successive adjacent turns of said tape.

Fig. 1.

Fig. 2.

Fig. 6.

Fig. 7.

## Fig.3.

COOLING

| NYLON TUBE EXTRUDER | TIE GUM LAYER APPLICATOR | REINFORCEMENT APPLICATOR | RUBBER COVER EXTRUDER |

15 · 18 · 20 · 4 · B · 21 · 5 · C · 24

17 · A · 16 · 19 · 4 · 17 · 22 · 5 · 23 · D

D · 25 · E · 26 · 27 · F · 28

| POWDER APPLICATOR | LEAD SHEATH EXTRUDER | COILING AND CUT-TO-LENGTH STATION |

29

## Fig.4.

20 · 15 · 17

## Fig.5.

22 · 20 · 17 · 15 · 20a

30

| VULCANIZER |